# FASCICULE DE BREVET EUROPEEN

(11) **EP 3 208 909 B1**
(45) Date de publication et mention de la délivrance du brevet: **14.08.2019**
(21) Numéro de dépôt: 16305181.6
(22) Date de dépôt: 18.02.2016
(51) Int. Cl.: H02J 4/00, H02J 5/00, H02J 3/46

(54) **SYSTÈME DE DISTRIBUTION D'ÉNERGIE ÉLECTRIQUE MIXTE À COURANT CONTINU ET À COURANT ALTERNATIF POUR L'ALIMENTATION DE CHARGES À FRÉQUENCE VARIABLE ET DE CHARGES À FRÉQUENCE FIXE**
SYSTEM ZUR VERTEILUNG VON GEMISCHTER ELEKTRISCHER ENERGIE AUF GLEICHSTROM UND WECHSELSTROM ZUR STROMVERSORGUNG VON VERBRAUCHERN MIT VARIABLER FREQUENZ UND VERBRAUCHERN MIT KONSTANTER FREQUENZ
MIXED AC-DC ELECTRICAL POWER DISTRIBUTION SYSTEM FOR SUPPLYING VARIABLE-FREQUENCY LOADS AND FIXED-FREQUENCY LOADS

(43) Date de publication de la demande: 23.08.2017
(73) Titulaire: GE Energy Power Conversion Technology Ltd, Rugby Warwickshire CV21 1BU (GB)
(72) Inventeur: POULIQUEN, Jean Louis, 91300 MASSY (FR); LECLERE, Loic, 90000 BELFORT (FR)
(74) Mandataire: Casalonga

(56) Documents cités:
- EP-A1- 1 914 162
- US-A1- 2012 302 112
- US-A1- 2014 008 988
- US-A1- 2014 361 621

## Description

La présente invention concerne les systèmes de distribution d'énergie électrique et concerne plus particulièrement les systèmes de distribution d'énergie électrique embarqués à bord de navires, pour l'alimentation de charges électriques d'un navire, telles que le système de propulsion, en ce qui concerne les navires à propulsion électrique, ou pour l'alimentation d'autres charges électriques.

Bien entendu, l'invention concerne également, de manière générale, les systèmes de distribution d'énergie électrique utilisés dans d'autres applications, destinés à l'alimentation de divers types de charges en énergie électrique.

Par exemple, dans une autre application, un tel système peut être utilisé en avionique, et être destiné à être embarqué à bord d'un avion ou être utilisé au sol.

Dans l'état de la technique, les systèmes de distribution d'énergie électrique embarqués à bord de navires à propulsion entièrement électrique, désignés par les anglosaxons par le terme de « FEP » pour « Full Electric Propulsion », comportent des générateurs de puissance, réalisés par exemple à partir de turbines et/ou de moteurs diesel entraînant des générateurs raccordés à un réseau de distribution primaire, lequel alimente directement les moteurs de propulsion par l'intermédiaire de convertisseurs de puissance et alimente un réseau secondaire de distribution qui alimente des charges auxiliaires de relativement forte puissance ou de relativement faible puissance.

On pourra à cet égard se référer au document EP 1 914 162 et au document US 2014/008988 A1 qui décrivent l'architecture d'un tel système de distribution de puissance selon l'état de la technique.

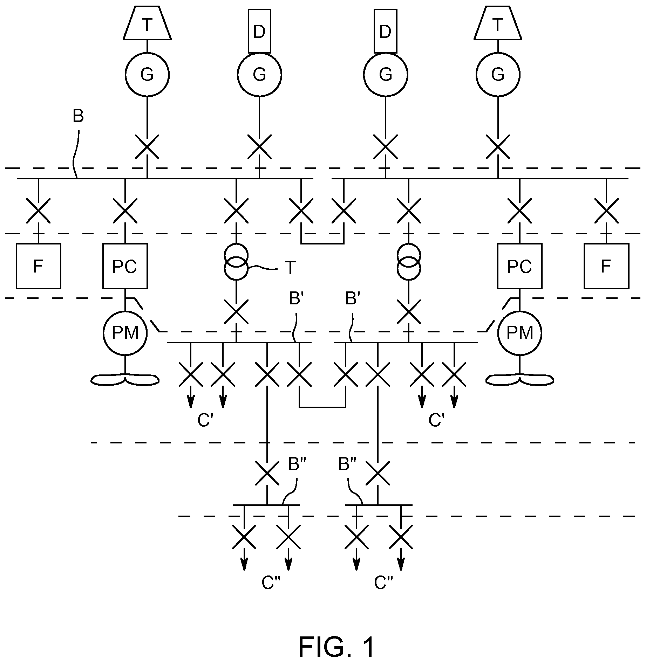

En référence à la figure 1, sur laquelle on reconnaît les turbines T et les moteurs diesel D qui entraînent des générateurs G qui alimentent des barres de distribution B d'un réseau primaire de distribution, on voit que les moteurs de propulsion PM du navire sont directement alimentés par la puissance disponible sur les barres B par l'intermédiaire de convertisseurs de puissance PC, tandis que les barres B' d'un réseau secondaire de distribution et les barres B" d'un réseau tertiaire de distribution alimentent respectivement les charges C' et C" de relativement forte puissance et de relativement faible puissance.

Les barres de distribution du réseau secondaire sont alimentées à partir du réseau primaire par l'intermédiaire de transformateurs T. Les barres de distribution du réseau primaire et les barres de distribution du réseau secondaire sont reliées entre elles par des disjoncteurs, illustrés par les signes de référence « X ». De tels moyens de protection sont également prévus en divers points caractéristiques du système de distribution.

Les disjoncteurs sont utilisés pour la protection des parties du réseau de distribution lorsqu'un défaut apparaît, tel qu'un court-circuit franc ou un défaut impédant, c'est-à-dire en cas de chute localisée de la résistance d'une partie du réseau de distribution, en isolant la partie du réseau incriminée pour éviter la propagation d'un courant de défaut.

Dans le document EP 1 914 162, on régule en outre des convertisseurs de tension prévus entre le générateur et le réseau de distribution lorsqu'un courant de défaut apparaît.

Il a été constaté que les dispositifs de distribution d'énergie électrique selon l'état de la technique souffrent d'un certain nombre d'inconvénients.

En premier lieu, dans les systèmes de distribution utilisés dans les navires de type FEP ou, de manière générale, dans les systèmes de distribution électrique de ce type, on utilise plusieurs générateurs qui alimentent en parallèle le réseau primaire de distribution, qui sont sélectivement activés en fonction des besoins.

Or, comme on le conçoit, lorsqu'on entraîne les générateurs à partir de moteurs diesels, le fonctionnement des moteurs n'est pas optimisé dans la mesure où ils fonctionnent à une vitesse fixe nominale et sont sollicités selon les besoins. La vitesse des moteurs d'entraînement des générateurs n'est donc pas contrôlée en fonction de la charge électrique.

Par ailleurs, il est connu d'alimenter diverses charges à partir d'un bus commun DC à courant continu. Lorsque ces charges fonctionnent en générateur, le bus commun est utilisé pour récupérer l'énergie et pour l'alimentation d'autres charges.

Une architecture de distribution d'énergie électrique utilisant un bus commun de type DC permet ainsi de récupérer une puissance provenant d'une charge fonctionnant en générateur pour l'alimentation d'autres charges.

Ainsi, un système de distribution d'énergie électrique doit être en mesure de satisfaire à un certain nombre d'exigences.

Il doit être capable d'assurer l'alimentation des charges de manière redondante, pour mettre en oeuvre un mode de fonctionnement dégradé qui assure une continuité de service, tout en permettant une régénération de la puissance fournie par cette charge lorsqu'elle fonctionne en mode générateur.

Il doit en outre être capable d'assurer une telle alimentation redondante de charges à fréquence fixe et de charges à fréquence variable.

Il doit bien entendu être capable d'assurer une protection du réseau de distribution en cas de défaut, notamment en cas de court-circuit ou en cas de défaut impédant dans des portions de réseau.

L'invention a ainsi pour but de limiter les courants de défaut dans un système de distribution d'énergie électrique bidirectionnel alimentant des charges à fréquence fixe et des charges à fréquence variable alimentées à partir d'un réseau de distribution à courant continu.

L'invention a donc pour objet un système de distribution d'énergie électrique pour l'alimentation d'un ensemble de charges à fréquence variable et d'un ensemble de charges à fréquence fixe, selon les caractéristiques de la revendication indépendant 1. Les modes de réalisation préférés font l'objet des revendications dépendantes.

Le premier ensemble d'étages redresseurs comporte des redresseurs bidirectionnels aptes à assurer un transfert bidirectionnel de puissance et des moyens de protection contre des courants de défaut raccordés entre les redresseurs bidirectionnels et le réseau de distribution.

Dans un mode de réalisation, le système de distribution comprend un premier réseau de distribution alimenté à partir des générateurs à fréquence fixe et un deuxième réseau de distribution alimenté à partir des premier et deuxième ensembles d'étages redresseurs et alimentant les charges à fréquence variable par l'intermédiaire des étages onduleurs.

Selon une autre caractéristique de l'invention, les moyens de protection comportent des dispositifs à semiconducteurs pilotés en fonction d'un courant circulant à partir des redresseurs ou de la tension du deuxième réseau de distribution à courant continu.

Dans un mode de réalisation, les dispositifs à semiconducteurs comportent deux thyristors branchés en anti parallèles.

Selon encore une autre caractéristique du système de distribution d'énergie électrique, celui-ci comporte une diode raccordée aux bornes des redresseurs bidirectionnels, entre lesdits redresseurs et le deuxième réseau de distribution.

Le système de distribution peut encore comporter des moyens pour rendre les étages onduleurs unidirectionnels en courant.

De tels moyens peuvent comprendre une diode placée en série entre le deuxième réseau et un étage onduleur.

Selon une autre caractéristique, le système de distribution d'énergie électrique conforme à l'invention comporte, pour chaque générateur du deuxième réseau de distribution, des moyens pilotables pour interrompre un courant de défaut circulant à partir dudit générateur.

Ces moyens pilotables pour interrompre le courant de défaut peuvent par exemple comporter un pont à thyristors branché en sortie du générateur.

Dans un mode de réalisation, lesdits étages redresseurs comprennent chacun un étage d'entrée de filtrage, un circuit redresseur bidirectionnel et un étage de lissage de la tension continue délivrée par le circuit redresseur.

Avantageusement, un étage de sectionnement est disposé entre chaque étage redresseur et le deuxième réseau de distribution.

L'étage de sectionnement peut comprendre des sectionneurs motorisés aptes à s'ouvrir à charge nulle.

Dans un mode de réalisation, au moins une partie des étages onduleurs comprend un hacheur de freinage comportant des résistances de freinage aptes à dissiper l'énergie provenant des charges.

Avantageusement, le premier réseau de distribution comporte des portions de réseau alimentées chacune par un générateur de tension alternative à fréquence fixe et raccordées entre elles par des disjoncteurs.

Le deuxième réseau de distribution peut comporter des portions de réseau alimentées respectivement à partir des générateurs à fréquence variable et à partir des étages redresseurs et raccordées entre elles par des disjoncteurs de type à courant alternatif opérant à tension nulle à l'ouverture et sous pleine tension à la fermeture.

L'invention a également pour objet, selon un deuxième aspect, selon les caractéristiques de la revendication indépendant 17, un procédé de distribution d'énergie électrique pour l'alimentation d'un ensemble de charges à fréquence fixe et d'un ensemble de charges à fréquence variable, pour la mise en oeuvre d'un système de distribution tel que défini ci-dessus, dans lequel on alimente le réseau de distribution au moyen des redresseurs bidirectionnels lorsque les générateurs à fréquence fixe sont inactifs en assurant des fonctions de régulation et de protection.

D'autres buts, caractéristiques et avantages de l'invention apparaîtront à la lecture de la description suivante, donnée uniquement à titre d'exemple non limitatif, et faite en référence aux dessins annexés sur lesquels :
- la figure 1, dont il a déjà été fait mention, illustre l'architecture d'un système de distribution d'énergie électrique selon l'état de la technique; et
- la figure 2 illustre l'architecture générale d'un système de distribution d'énergie électrique conforme à l'invention ; et
- la figure 3 illustre un autre mode de réalisation d'un système de distribution d'énergie électrique conforme à l'invention.

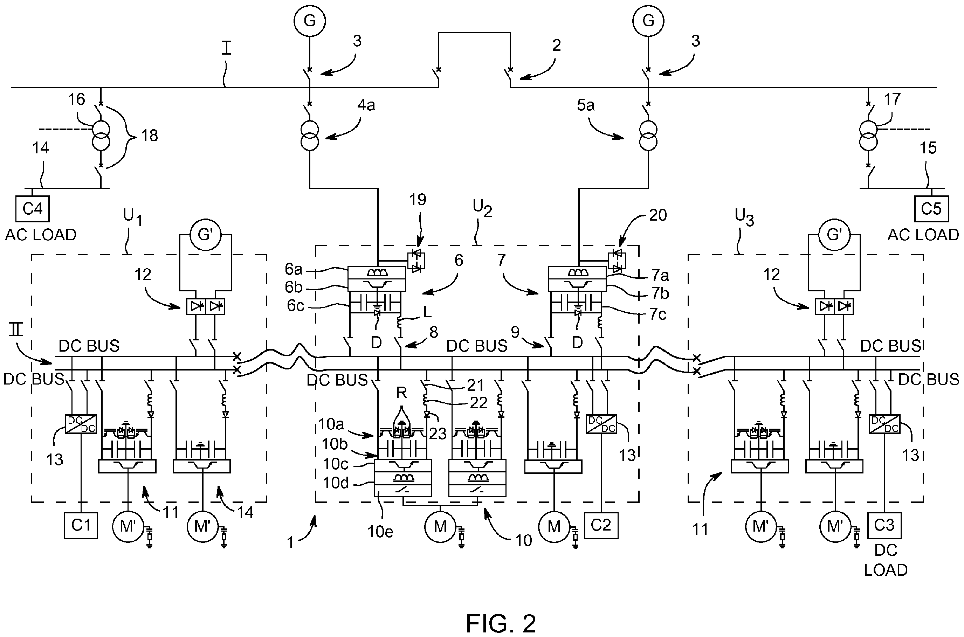

Sur la figure 2, on a représenté un système de distribution d'énergie électrique conforme à l'invention, désigné par la référence numérique générale 1.

Ce système de distribution d'énergie électrique constitue un système de distribution mixte AC et DC et est destiné à l'alimentation de charges électriques à fréquence variable et de charges électriques à fréquence fixe.

Le système de distribution comporte ainsi un réseau primaire I de distribution auquel sont raccordés plusieurs générateurs G redondants délivrant au réseau primaire I une puissance alternative à fréquence fixe et un réseau secondaire II alimenté, d'une part, à partir du réseau primaire I et à partir de générateurs G' à fréquence variable.

Comme on le voit, les réseaux de distribution primaire et secondaire I et II sont constitués de barres de distribution qui sont raccordées entre elles par des disjoncteurs tels que 2 qui sont destinés à assurer l'isolation de portions des réseaux de distribution en cas de défaut. De même, les générateurs G sont raccordés au jeu de barres du réseau primaire 1 par des disjoncteurs 3. Dans l'exemple illustré, le réseau primaire comporte un jeu de deux barres alimentées chacune par un générateur. Bien entendu, on ne sort pas du cadre de l'invention lorsque le réseau est doté d'un nombre quelconque de barres alimentées chacune à partir d'un ou de plusieurs générateurs G.

Comme on le voit, pour l'alimentation des charges à fréquence variable, le système de distribution comporte ici trois tableaux de distribution à courant continu DC U1, U2, U3. Comme cela sera détaillé par la suite, les tableaux de distribution DC alimentent les charges à fréquence variable, telles que des moteurs M et M', par l'intermédiaire d'onduleurs 10 et 11. Ils sont également destinés à l'alimentation de charges C1 et C2 à courant continu DC par l'intermédiaire de convertisseurs DC/DC.

Bien entendu, on ne sort pas du cadre de l'invention lorsque l'on utilise un nombre quelconque de tableaux de distribution DC.

Le tableau de distribution DC U2 est raccordé au jeu de barres du réseau primaire I par des transformateurs 4a et 5a. Il est alimenté de manière redondante par chacune des barres du réseau primaire.

Le tableau de distribution DC U2 comporte deux redresseurs bidirectionnels 6 et 7 qui assurent le redressement de la tension délivrée par le jeu de barres du réseau primaire I et délivre la tension redressée au réseau secondaire II par l'intermédiaire d'étages de sectionnement comprenant des sectionneurs 8 et 9. Comme on le voit sur la figure 2, le jeu de barres du réseau secondaire est alimenté par ailleurs à partir de générateurs G' à fréquence variable.

Les charges M et M' à fréquence variable sont alimentées à partir du jeu de barres du réseau secondaire II par l'intermédiaire d'onduleurs tels que 10 et 11.

Le système de distribution comporte ainsi des générateurs redondants G à fréquence fixe, qui délivrent au réseau primaire une tension alternative à fréquence fixe et qui alimentent le réseau secondaire par l'intermédiaire des redresseurs 6 et 7 ainsi que des générateurs G' associés chacun à un étage redresseur 12 qui alimentent le jeu de barres du réseau secondaire.

On obtient ainsi une alimentation en parallèle des diverses charges à partir de générateurs redondants. Tel que représenté, les charges à fréquence variable M et M' peuvent être alimentées à partir des onduleurs 10 et 11 raccordés au réseau secondaire.

Les barres de distribution du réseau secondaire sont raccordées en parallèle, les étages onduleurs étant pilotés pour assurer l'alimentation des charges à fréquence variable.

Comme indiqué précédemment, le réseau secondaire II assure en outre l'alimentation de charges à courant continu C1, C2 et C3 par l'intermédiaire de convertisseurs 13 DC/DC. Ces charges pourraient être des dispositifs de stockage d'énergie tels que des batteries ou des supercondensateurs ou autres tels que des hacheurs de freinage.

Des charges à fréquence fixe raccordées à des bus d'alimentation, telles que 14 et 15, eux-mêmes raccordés au réseau primaire par des transformateurs 16 et 17, par l'intermédiaire de disjoncteurs, tels que 18, sont ainsi alimentés par le réseau primaire I.

On notera toutefois que les redresseurs 6 et 7 du tableau de distribution U2 sont des redresseurs bidirectionnels qui assurent un transfert de puissance électrique bidirectionnel. Il est ainsi possible d'alimenter le réseau primaire à fréquence fixe à partir de l'énergie électrique disponible sur le réseau secondaire, en utilisant les redresseurs bidirectionnels, lorsque par exemple, les générateurs à fréquence fixe sont inactifs ou que la puissance délivrée par le ou les générateur(s) à fréquence fixe est insuffisante.

Le réseau primaire et les charges à fréquence fixe connectées à ce réseau primaire peuvent dès lors être alimentés à partir de la puissance électrique disponible sur le réseau secondaire.

De même, lorsque des charges raccordées au tableau de distribution U2 fonctionnent en mode générateur, l'énergie électrique fournie par ces charges peut être régénérée et être fournie à d'autres charges raccordées au système de distribution.

Les redresseurs bidirectionnels comportent ainsi un étage 6a, 7a de filtrage disposé en entrée, du côté alternatif, suivi d'un circuit redresseur 6b, 7b convertissant la tension alternative reçue en provenance du réseau primaire I en tension continue, et un étage de lissage 6c, 7c.

Du côté continu, les redresseurs bidirectionnels 6 et 7 sont pourvus d'une inductance L ainsi que, comme indiqué précédemment, d'un sectionneur 8, 9, par exemple motorisé, apte à s'ouvrir à charge nulle.

En outre, les redresseurs bidirectionnels 6 et 7 sont dotés de circuits de protection 19 et 20 raccordés en dérivation entre les transformateurs 4a et 5a et les redresseurs bidirectionnels 6 et 7 qui permettent d'assurer une protection des réseaux de distribution en cas de court-circuit ou de défaut impédant.

Comme on le voit, les circuits de protection 19 et 20 comportent deux thyristors raccordés en antiparallèle et constituent un circuit gradateur de courant, également connu par les anglosaxons par le terme de « Crowbar ». D'autres dispositifs pourraient également être utilisés, en variante, par exemple à base de semiconducteurs, tels que des IGCT (pour « Integrated Gate Controlled Thyristor ») ou GTO.

Un tel circuit permet d'absorber un courant de court-circuit en créant un circuit à faible résistance sur le trajet d'un courant de défaut.

Par ailleurs, entre le circuit de lissage 6c et le jeu de barres du réseau de distribution secondaire II, les circuits redresseurs sont dotés de diodes D qui permettent d'éviter une inversion ou une oscillation de la tension en présence d'un circuit résonnant apparaissant en cas de défaut.

En ce qui concerne les onduleurs 10, ceux-ci comportent en premier lieu un hacheur 10a de freinage doté de résistances de freinage R assurant la dissipation de l'énergie lors de l'inversion de la vitesse du moteur M.

Par ailleurs, un étage de lissage 10b, un onduleur 10c, un étage de filtrage 10d ainsi qu'un sectionneur 10e assurent conjointement l'alimentation des charges à fréquence variable.

Bien entendu, certains onduleurs peuvent être dépourvus de hacheur de freinage, d'étage de lissage ou d'étage de filtrage.

Comme on le voit, les onduleurs 10 sont raccordés au jeu de barres du réseau secondaire par l'intermédiaire des sectionneurs 21, d'inductances 22 et de diodes 23 destinées à conserver le caractère unidirectionnel en courant des onduleurs 10.

Ainsi, le système de distribution d'énergie électrique est en premier lieu doté de moyens de protection comprenant un gradateur de courant ou « crowbar » branché, du côté alternatif, entre le réseau primaire de distribution et chaque redresseur bidirectionnel pour absorber les courants de défaut susceptibles d'apparaître du côté continu. Un tel dispositif de protection peut être réalisé à partir de thyristors pilotés à partir d'un capteur de courant prévu du côté continu, par exemple entre le jeu de barres du réseau secondaire de distribution et le redresseur bidirectionnel, ou à partir du niveau de tension du deuxième réseau de distribution à courant continu.

Par ailleurs, une diode D est raccordée entre les bornes du redresseur bidirectionnel, du côté continu, afin d'éviter la création d'un système oscillatoire à partir notamment des condensateurs de l'étage de lissage 6c apparaissant en cas de défaut.

Par ailleurs, les générateurs G' à fréquence variable sont associés à des moyens pilotables 12 destinés à interrompre le courant de défaut qui serait susceptible de circuler à partir des générateurs.

Comme on le voit, ces moyens comprennent des thyristors qui sont branchés entre les sorties des générateurs G' et qui sont pilotables au moyens de capteurs de courant par exemple disposés en sortie des générateurs, pour pouvoir interrompre un courant de défaut issu des générateurs G'. D'autres dispositifs pourraient également être utilisés, en variante, par exemple à base de semiconducteurs, tels que des IGCT (pour « Integrated Gate Controlled Thyristor ») ou GTO.

Comme on le conçoit, l'invention qui vient d'être décrite, qui utilise des redresseurs bidirectionnels placés entre le réseau primaire alimenté à partir de générateurs à fréquence fixe et le réseau secondaire qui alimente les charges, permet notamment de mettre en oeuvre un transfert de puissance bidirectionnel entre le réseau primaire et le réseau secondaire et par conséquent de répartir la distribution de puissance entre les charges raccordées au système de distribution. L'utilisation du gradateur de courant, qui coopère avec les diodes branchées aux bornes de chaque étage redresseur et les circuits à thyristors raccordés en sortie des générateurs à fréquence variable, permet en outre de limiter les effets d'un court-circuit susceptible d'apparaître dans des portions du système de distribution, et ce sans utiliser de dispositif de protection à fusibles.

On notera enfin que l'invention n'est pas limitée au mode de réalisation décrit.

En effet, dans le mode de réalisation décrit en référence à la figure 2, le système de distribution comprend un réseau primaire alimenté par des générateurs délivrant une tension alternative à fréquence fixe et un réseau secondaire alimenté d'une part par le réseau primaire par l'intermédiaire de redresseurs bidirectionnels et, d'autre part, par des générateurs à fréquence variable par l'intermédiaire de redresseurs, et alimente des charges à fréquence variable et des charges continues, des charges à fréquence fixe pouvant être alimentées à partir du réseau primaire.

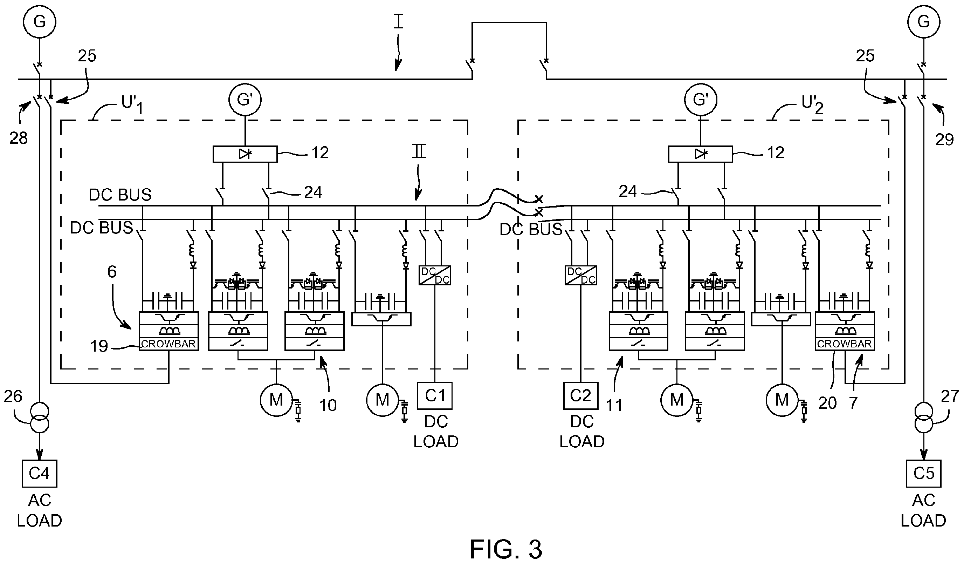

Dans l'exemple de réalisation illustré à la figure 3, sur laquelle des éléments identiques à ceux de la figure 1 sont désignés par les mêmes références, le système comporte deux générateurs G de tension alternative à fréquence fixe alimentant un réseau primaire I comprenant un jeu de barres alimentées respectivement par les générateurs G et deux générateurs G' de tension alternative à fréquence variable alimentant deux tableaux de distribution U'1 et U'2.

Les tableaux de distribution U'1 et U'2 comportent des étages redresseurs 12 raccordés au réseau II par l'intermédiaire de sectionneurs 24 et le réseau primaire I alimentent un réseau secondaire II et un réseau secondaire II.

Le réseau primaire I est raccordé aux tableaux par l'intermédiaire de disjoncteurs 25.

Sur cette figure, on reconnaît les redresseurs bidirectionnels 6 et 7, alimentés par le réseau primaire pour l'alimentation du réseau secondaire, qui sont équipés des gradateurs 19 et 20, schématiquement représentés sur la figure 3, ainsi que les onduleurs 10 et 11, identiques aux onduleurs décrits précédemment en référence à la figure 2, raccordés au réseau secondaire II pour l'alimentation des charges à fréquence variable M.

Des charges à fréquence fixe C1 et C2 sont alimentées à partir des générateurs à fréquence fixe G par l'intermédiaire de transformateurs 26 et 27 et de disjoncteurs 28 et 29.

Le fonctionnement du système de distribution décrit sur la figure 3 est similaire à celui décrit en référence à la figure 2 et permet d'alimenter le réseau primaire par l'intermédiaire des redresseurs bidirectionnels en l'absence des générateurs à fréquence fixe G.

## Revendications

1. Système de distribution d'énergie électrique pour l'alimentation d'un ensemble de charges à fréquence fixe et d'un ensemble de charges à fréquence variable, comprenant un ensemble d'au moins un générateur (G) de tension alternative à fréquence fixe et un ensemble d'au moins un générateur (G') de tension alternative à fréquence variable, un réseau de distribution (II) à courant continu alimentant lesdites charges à fréquence variable par l'intermédiaire d'étages onduleurs (10, 11), un premier ensemble d'étages redresseurs (6, 7) raccordés entre les générateurs à fréquence fixe et le réseau de distribution et un deuxième ensemble d'étages redresseurs (12, 24, 25) raccordés entre les générateurs à fréquence variable (G') et le réseau de distribution, le premier ensemble d'étages redresseurs (6, 7) comprenant des redresseurs bidirectionnels aptes à assurer un transfert bidirectionnel de puissance et des moyens de protection (19, 20) contre des courants de défaut raccordés en dérivation entre les redresseurs bidirectionnels et ledit ensemble d'au moins un générateur de tension alternative à fréquence fixe.

2. Système de distribution selon la revendication 1, comprenant un premier réseau de distribution (I) alimenté à partir des générateurs à fréquence fixe et un deuxième réseau de distribution (II) alimenté à partir des premier et deuxième ensembles d'étages redresseurs et alimentant les charges à fréquence variable par l'intermédiaire des étages onduleurs.

3. Système de distribution selon la revendication 1 ou 2, dans lequel les moyens de protection comportent des dispositifs à semiconducteurs pilotés en fonction d'un courant circulant à partir des redresseurs.

4. Système de distribution selon la revendication 1 ou 2, dans lequel les moyens de protection comportent des dispositifs à semiconducteurs pilotés en fonction de la tension du deuxième réseau de distribution à courant continu.

5. Système selon l'une des revendications 3 et 4, dans lequel les dispositifs à semiconducteurs comportent deux thyristors en antiparallèle.

6. Système selon l'une quelconque des revendications 1 à 5, comprenant une diode (D) raccordée aux bornes des redresseurs bidirectionnels, entre lesdits redresseurs et le deuxième réseau.

7. Système selon l'une quelconque des revendications 1 à 6, comprenant des moyens (18) pour rendre les étages onduleurs unidirectionnels en courant.

8. Système selon la revendication 7, comprenant une diode placée en série entre le deuxième réseau et un étage onduleur.

9. Système selon l'une quelconque des revendications 1 à 8, comprenant, pour chaque générateur de deuxième réseau de distribution, des moyens pilotables (12) pour interrompre un courant de défaut circulant à partir dudit générateur.

10. Système selon la revendication 9, dans lequel lesdits moyens pilotables pour interrompre le courant de défaut comprennent un pont à thyristors branché en sortie du générateur.

11. Système selon l'une quelconque des revendications 1 à 10, dans lequel les étages redresseurs comprennent chacun un étage d'entrée de filtrage (6a, 7a), un circuit redresseur bidirectionnel (6b, 7b) et un étage de lissage (6c, 7c) de la tension continue délivrée par le circuit redresseur.

12. Système selon la revendication 11, comprenant en outre un étage de sectionnement (8, 9) disposé entre chaque étage redresseur et le deuxième réseau de distribution.

13. Système selon la revendication 11, dans lequel l'étage de sectionnement comprend des sectionneurs motorisés aptes à s'ouvrir à charge nulle.

14. Système selon l'une quelconque des revendications 1 à 13, dans lequel au moins une partie des étages onduleurs comprend un hacheur de freinage (10a) comportant des résistances de freinage (R) aptes à dissiper l'énergie provenant des charges.

15. Système selon l'une quelconque des revendications 1 à 14, dans lequel le premier réseau de distribution comporte des portions de réseau alimentées chacune par un générateur de tension alternative à fréquence fixe et raccordées entre elles par des disjoncteurs (2).

16. Système selon l'une quelconque des revendications 1 à 15, dans lequel le deuxième réseau de distribution comporte des portions de réseau alimentées respectivement à partir des générateurs à fréquence variable et à partir des étages redresseurs et raccordées entre elles par des disjoncteurs (2) de type à courant alternatif opérant à tension nulle à l'ouverture et sous tension à la fermeture.

17. Procédé de distribution d'énergie électrique pour l'alimentation d'un ensemble de charges à fréquence fixe et d'un ensemble de charges à fréquence variable, pour la mise en oeuvre d'un système de distribution selon l'une quelconque des revendications 1 à 16, **caractérisé en ce que** l'on alimente le réseau de distribution au moyen des redresseurs bidirectionnels lorsque les générateurs à fréquence fixe sont inactifs en assurant des fonctions de régulation et de protection.

## Patentansprüche

1. System zur Verteilung von elektrischer Energie zur Versorgung einer Gruppe von Verbrauchern mit fester Frequenz und einer Gruppe von Verbrauchern mit variabler Frequenz, umfassend eine Anordnung von mindestens einem Generator (G) für Wechselspannung mit fester Frequenz und eine Anordnung von mindestens einem Generator (G') für Wechselspannung mit variabler Frequenz, wobei ein Gleichstromverteilungsnetz (II) die Verbraucher mit variabler Frequenz über Wechselrichterstufen (10, 11), eine erste Anordnung von Gleichrichterstufen (6, 7), die zwischen den Generatoren mit fester Frequenz und dem Verteilungsnetz angeschlossen sind, und eine zweite Anordnung von Gleichrichterstufen (12, 24, 25), die zwischen den Generatoren mit variabler Frequenz (G') und dem Verteilungsnetz angeschlossen sind, versorgt, wobei die erste Anordnung von Gleichrichterstufen (6, 7) bidirektionale Gleichrichter, die geeignet sind, eine bidirektionale Übertragung von Leistung zu gewährleisten, und Schutzmittel (19, 20) zum Schutz vor Fehlerströmen, die abzweigend zwischen den bidirektionalen Gleichrichtern und der Anordnung von mindestens einem Generator für Wechselspannung mit fester Frequenz angeschlossen sind, umfasst.

2. Verteilungssystem nach Anspruch 1, umfassend ein erstes Verteilungsnetz (I), das ausgehend von den Generatoren mit fester Frequenz versorgt wird, und ein zweites Verteilungsnetz (II), das ausgehend von den ersten und zweiten Anordnungen von Gleichrichterstufen versorgt wird und die Verbraucher mit variabler Frequenz über Wechselrichterstufen versorgt.

3. Verteilungssystem nach Anspruch 1 oder 2, bei dem die Schutzmittel Halbleitervorrichtungen umfassen, die in Abhängigkeit von einem ausgehend von den Gleichrichtern fließenden Strom angesteuert werden.

4. Verteilungssystem nach Anspruch 1 oder 2, bei dem die Schutzmittel Halbleitervorrichtungen umfassen, die in Abhängigkeit von der Spannung des zweiten Gleichstromverteilungsnetzes angesteuert werden.

5. System nach einem der Ansprüche 3 und 4, bei dem die Halbleitervorrichtungen zwei antiparallel geschaltete Thyristoren umfassen.

6. System nach einem der Ansprüche 1 bis 5, umfassend eine Diode (D), die an die Klemmen der bidirektionalen Gleichrichter, zwischen den Gleichrichtern und dem zweiten Netz, angeschlossen ist.

7. System nach einem der Ansprüche 1 bis 6, umfassend Mittel (18), um die Wechselrichterstufen für Strom unidirektional zu machen.

8. System nach Anspruch 7, umfassend eine Diode, die in Reihe zwischen dem zweiten Netz und einer Wechselrichterstufe angeordnet ist.

9. System nach einem der Ansprüche 1 bis 8, umfassend, für jeden Generator des zweiten Verteilungsnetzes, ansteuerbare Mittel (12), um einen ausgehend vom dem Generator fließenden Fehlerstrom zu unterbrechen.

10. System nach Anspruch 9, bei dem die ansteuerbaren Mittel zum Unterbrechen des Fehlerstroms eine Thyristorbrücke umfassen, die im Ausgang des Generators angeschlossen ist.

11. System nach einem der Ansprüche 1 bis 10, bei dem die Gleichrichterstufen jeweils eine Filtereingangsstufe (6a, 7a), eine bidirektionale Gleichrichterschaltung (6b, 7b) und eine Glättungsstufe (6c, 7c) für die von der Gleichrichterschaltung abgegebene Gleichspannung umfassen.

12. System nach Anspruch 11, umfassend ferner eine Trennstufe (8, 9), die zwischen jeder Gleichrichterstufe und dem zweiten Verteilungsnetz angeordnet ist.

13. System nach Anspruch 11, bei dem die Trennstufe motorbetriebene Trennschalter umfasst, die geeignet sind, sich bei Nulllast zu öffnen.

14. System nach einem der Ansprüche 1 bis 13, bei dem mindestens ein Teil der Wechselrichterstufen einen Brems-Chopper (10a) umfasst, der Bremswiderstände (R) aufweist, die geeignet sind, die von den Verbrauchern kommende Energie abzuführen.

15. System nach einem der Ansprüche 1 bis 14, bei dem das erste Verteilungsnetz Netzabschnitte aufweist, die jeweils von einem Generator für Wechselspannung mit fester Frequenz versorgt werden und über Leistungsschalter (2) untereinander angeschlossen sind.

16. System nach einem der Ansprüche 1 bis 15, bei dem das zweite Verteilungsnetz Netzabschnitte aufweist, die ausgehend von Generatoren mit variabler Frequenz beziehungsweise ausgehend von Gleichrichterstufen versorgt werden und untereinander über Wechselstrom-Leistungsschalter (2) angeschlossen sind, die bei Nullspannung öffnend und unter Spannung schließend arbeiten.

17. Verfahren zur Verteilung von elektrischer Energie zur Versorgung einer Gruppe von Verbrauchern mit fester Frequenz und einer Gruppe von Verbrauchern mit variabler Frequenz zur Implementierung eines Verteilungssystems nach einem der Ansprüche 1 bis 16, **dadurch gekennzeichnet, dass** das Verteilungsnetz mittels von bidirektionalen Gleichrichtern versorgt wird, wenn die Generatoren mit fester Frequenz inaktiv sind, wobei Regelungs- und Schutzfunktionen gewährleistet werden.

## Claims

1. Electrical energy distribution system for supplying a set of fixed-frequency loads and a set of variable-frequency loads with power, comprising a set of at least one fixed-frequency AC voltage generator (G) and a set of at least one variable-frequency AC voltage generator (G'), a DC distribution network (II) supplying said variable-frequency loads with power via inverter stages (10, 11), a first set of rectifier stages (6, 7) that are connected between the fixed-frequency generators and the distribution network and a second set of rectifier stages (12, 24, 25) that are connected between the variable-frequency generators (G') and the distribution network, the first set of rectifier stages (6, 7) comprising bidirectional rectifiers that are capable of providing a bidirectional transfer of power and means (19, 20) for protection from fault currents that are connected as a bypass between the bidirectional rectifiers and said set of at least one fixed-frequency AC voltage generator.

2. Distribution system according to Claim 1, comprising a first distribution network (I) supplied with power from the fixed-frequency generators and a second distribution network (II) supplied with power from the first and second sets of rectifier stages and supplying the variable-frequency loads with power via the inverter stages.

3. Distribution system according to Claim 1 or 2, wherein the protection means include semiconductor devices that are driven according to a current flowing from the rectifiers.

4. Distribution system according to Claim 1 or 2, wherein the protection means include semiconductor devices that are driven according to the voltage of the second DC distribution network.

5. System according to either of Claims 3 and 4, wherein the semiconductor devices include two antiparallel thyristors.

6. System according to any one of Claims 1 to 5, comprising a diode (D) connected to the terminals of the bidirectional rectifiers, between said rectifiers and the second network.

7. System according to any one of Claims 1 to 6, comprising means (18) for making the inverter stages unidirectional for current.

8. System according to Claim 7, comprising a diode connected in series between the second network and an inverter stage.

9. System according to any one of Claims 1 to 8, comprising, for each second distribution network generator, driveable means (12) for interrupting a fault current flowing from said generator.

10. System according to Claim 9, wherein said driveable means for interrupting the fault current comprise a thyristor bridge connected at the output of the generator.

11. System according to any one of Claims 1 to 10, wherein the rectifier stages each comprise a filtering input stage (6a, 7a), a bidirectional rectifier circuit (6b, 7b) and a smoother stage (6c, 7c) for smoothing the DC voltage delivered by the rectifier stage.

12. System according to Claim 11, further comprising a disconnector stage (8, 9) arranged between each rectifier stage and the second distribution network.

13. System according to Claim 11, wherein the disconnector stage comprises motorized disconnectors that are capable of opening off-load.

14. System according to any one of Claims 1 to 13, wherein at least a portion of the inverter stages comprises a braking chopper (10a) including braking resistors (R) that are capable of dissipating the energy from the loads.

15. System according to any one of Claims 1 to 14, wherein the first distribution network includes network portions that are each supplied with power by a fixed-frequency AC voltage generator and are connected to one another by circuit breakers (2).

16. System according to any one of Claims 1 to 15, wherein the second distribution network includes network portions that are supplied with power from the variable-frequency generators and from the rectifier stages, respectively, and are connected to one another by AC circuit breakers (2) operating at zero voltage for opening and under voltage for closing.

17. Electrical energy distribution method for supplying a set of fixed-frequency loads and a set of variable-frequency loads with power, for implementing a distribution system according to any one of Claims 1 to 16, **characterized in that** the distribution network is supplied with power by means of the bidirectional rectifiers when the fixed-frequency generators are inactive while providing control and protection functions.
